# EUROPEAN PATENT APPLICATION

(11) **EP 4 786 837 A1**
(43) Date of publication of application: **05.08.2026**
(21) Application number: 25154626.3
(22) Date of filing: 29.01.2025
(51) Int. Cl.: F16L 5/06, F16L 5/10, F16L 41/08, F16L 41/14

(54) **FLUID GROMMET**

(71) Applicant: Volvo Car Corporation, 405 31 Göteborg (SE)
(72) Inventor: Maric, Dragisa, 405 31 Göteborg (SE)
(74) Representative: Nederlandsch Octrooibureau

(57) **Abstract**

A grommet assembly for a fluid, the grommet assembly comprising: a grommet having a grommet wall that defines a passage for routing the fluid through a panel, and a spigot having a tubular body with a first tubular portion and a second tubular portion, an inner surface of the first tubular portion comprising engagement means; wherein the spigot is configured to be rotated for engagement with the grommet such that the first tubular portion is fluidly tightened against the panel.

## Description

### TECHNICAL FIELD

The present disclosure relates to a grommet assembly used for applications in automotive industry. The present disclosure also relates to a method for installing a grommet assembly.

### BACKGROUND ART

A grommet assembly typically includes a grommet designed to be inserted through a hole of a thin material, such as metal, plastic or rubber panel, and a grommet cover. The grommet is generally flared or collared on each end sides to keep the grommet in place. When installing the grommet assembly in the panel, the grommet is inserted into the hole from one side of the panel, and the grommet cover is fixed to the panel once mounted on the grommet from the other side of the panel. Additionally, certain industry standards regarding the tightness of the grommet assembly exists today, like the Water Tightness Requirement REQ-177530 in the automotive industry. These standards may maintain expected results for fluid tightness. Currently, available solutions pertaining to these standards require of screws to fix the grommet assembly to the panel.

### SUMMARY

According to an embodiment, a grommet assembly for a fluid is provided. The grommet assembly for a fluid comprises a grommet having a grommet wall that defines a passage for routing the fluid through a panel, and a spigot having a tubular body with a first tubular portion and a second tubular portion, an inner surface of the first tubular portion comprising engagement means; wherein the spigot is configured to be rotated for engagement with the grommet such that the first tubular portion is fluidly tightened against the panel. This arrangement allows transferring a fluid through the passage while fulfilling tightens requirements in the automotive industry, without the necessity of screws, nuts or inserts to fix the grommet assembly to the panel, as the spigot is used as joint instead of the screws, nuts or inserts, thereby minimizing the space required by the grommet assembly, and reducing manufacturing costs. Furthermore, as the spigot can be rotated from the spigot side, for example by hand, no extra hand is needed to hold the grommet during torquing, thereby reducing the necessity of using two hands during the installation.

According to an embodiment, an inner surface of the second tubular portion may have a tool-shape profile for rotating the spigot on the grommet such that the first tubular portion is fluidly tightened against the panel. By having a tool-shape profile, only one tool is required for rotating the spigot on the grommet.

Optionally, the tool-shape profile can comprise a n-sided shape, n being an integer positive number. Preferably n is 6 as, for example, a hex key (also known as Allen key or Allen wrench). With their hexagonal shape, a hex key allows for high grip strength and torque, making it easier to apply the necessary pressure for engaging the spigot with the grommet, such that the spigot is fluidly tightened against the panel.

According to an embodiment, the engagement means comprises a number of threads. Optionally, the threads can have a geometry to create a rotational coupling with, at least, a part of the inner surface of the grommet. A specific geometry of the threads can account for the thermal expansion of the spigot and/or grommet and secure the engagement of the spigot with the grommet.

According to an embodiment, the number of threads depends on at least one of a material of the grommet, a material of the spigot and a material of the panel. For example, the grommet, the spigot, and/or the panel can be made of plastic material, a metal material, or a combination thereof. Plastic materials can have a good electrical and thermal insulation, allowing electrical and thermal isolation of any component from the fluid, and vice versa. Furthermore, plastic material is relatively inexpensive and typically easy to manufacture, thus providing cost savings. Examples of suitable plastic materials are polypropylene, polyethylene, and the like, or any combination thereof. Metal materials can support high pressures, allowing the use of the grommet assembly when a high-pressure fluid is guided through the grommet assembly. Optionally, the number of threads may also depend on a material of the sealing ring and/or a torque needed to be applied to the spigot for fluidly tightening the spigot against the panel.

According to an embodiment, the grommet assembly comprises a sealing ring, wherein the first tubular portion comprises a sealing groove extending along a thickness of the first tubular portion, the sealing groove for receiving the sealing ring such that the first tubular portion is fluidly tight against the panel. The sealing ring ensures an effective tightened between the spigot and the panel, thereby improving the sealing performance. Furthermore, the sealing ring allows reducing vibrations (that is, it provides vibration dampening), thereby extending the lifespan of the grommet assembly. Optionally, the sealing ring can be made of plastic, for example, rubber. Plastic sealing rings are relatively low cost compared with metal sealing rings, generally cheaper to manufacture and easier to mass produce.

According to an embodiment, the spigot comprises an outer spigot surface, and means for connecting to a first fluid pipe, at least, in a part of the outer spigot surface.

According to an embodiment, the grommet has a first grommet portion for receiving the spigot and a second grommet portion for connecting to a second fluid pipe, and wherein the grommet comprises a plate outwardly extending from the grommet wall, wherein the plate is configured to be placed against the panel. This arrangement of the plate allows that the grommet remains tighten against the spigot with a minimal surface. That is, the plate does not need of any further hole, which directly implies a larger surface of the plate, to introduce screws for attaching the grommet to the panel, thereby, allowing to reduce material cost and saving space.

According to an embodiment, the grommet has a bended-shape defined by the first grommet portion being bended at a predetermined angle with respect to the second grommet portion. Having a bended-shape allows for design flexibility, improving customization and economizing expenses related to additional connections. Optionally, the predetermined angle is 45-135 degrees, preferably the predetermined angle is 60-120 degrees, and most preferably, the predetermined angle is 80-100 degrees.

According to an embodiment, the grommet assembly comprises one or more further grommets and one or more further spigots. By comprising one or more further grommets and one or more further spigots, the grommet assembly can be designed according to use necessities, thereby improving design. A grommet and corresponding spigot can be named a grommet/spigot pair. For example, the grommet assembly can have two grommet/spigot pairs, in case the grommet assembly is used for guiding the fluid in two directions, or for using fluid at different temperatures, or for using different fluids. As another example, the grommet assembly can have three grommet/spigot pairs, i.e. three grommets and three spigots. The grommet assembly may have any suitable number of grommet/spigot pairs.

According to an embodiment, a vehicle comprising the grommet assembly is provided Within a vehicle, lack of space is an issue. The grommet assembly allows to minimize the required space as the spigot is used as joint without the need of screws, nuts or inserts , allowing that other components of the vehicle use the saved space.

According to an embodiment, and in accordance with the grommet assembly described herein above, a method for installing the grommet assembly is provided. The method comprises inserting the grommet into a through-hole of the panel, and rotating the spigot for engagement with the grommet such that first tubular portion is fluidly tightened against the panel.

According to an embodiment, rotating the spigot for engagement with the grommet comprises engaging the spigot with the grommet by applying a torque to a tool-shape profile of an inner surface of the second tubular portion for rotating the spigot on the grommet such that the first tubular portion is fluidly tightened against the panel by using a tool having a complementary shape to the tool-shape profile.

According to an embodiment, the method for installing the grommet assembly further comprises connecting a first fluid pipe to, at least, a part of an outer spigot surface, and connecting a second fluid pipe to a second grommet portion of the grommet.

The person skilled in the art will understand that the features described above may be combined in any way deemed useful.

### BRIEF DESCRIPTION OF DRAWINGS

The present disclosure will be described in more detail with reference to the drawings that show preferred embodiments, wherein:
FIG. 1 shows a perspective view of a grommet assembly according to one example of the disclosure;
FIG. 2 shows a perspective view of a grommet according to according to one example of the disclosure;
FIG. 3 shows a cross-sectional view of a grommet according to according to one example of the disclosure;
FIG. 4(a) and (b) show a perspective view of a spigot according to according to one example of the disclosure;
FIG. 5 shows a cross-sectional view of a spigot according to according to one example of the disclosure; and
FIG. 6 shows a schematic of a method for installing a grommet assembly according to one example of the disclosure.

The drawing figures do not limit the present disclosure to the specific embodiments disclosed and described herein. The drawings are not necessarily to scale, emphasis instead being placed upon clearly illustrating the principles of the preferred embodiments.

### DESCRIPTION OF EMBODIMENTS

The aspects of the present disclosure will now be described more fully hereinafter with reference to the accompanying drawings, in which certain embodiments of the disclosure are shown. The use of the same reference numerals may indicate similar or identical items. Various embodiments may utilize elements and/or components other than those illustrated in the drawings, and some elements and/or components may not be present in various embodiments. Elements and/or components in the figures are not necessarily drawn to scale. Throughout this disclosure, depending on the context, singular and plural terminology may be used interchangeably.

The terms used in describing the embodiments of the present disclosure are for the purpose of describing particular embodiments and are not intended to limit the present disclosure. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present disclosure, and similarly, a second element may be referred to as a first element. Orientation terms such as "upper", "lower", "left" and "right" as used herein is only for description other than limitation on orientation of various devices and parts used.

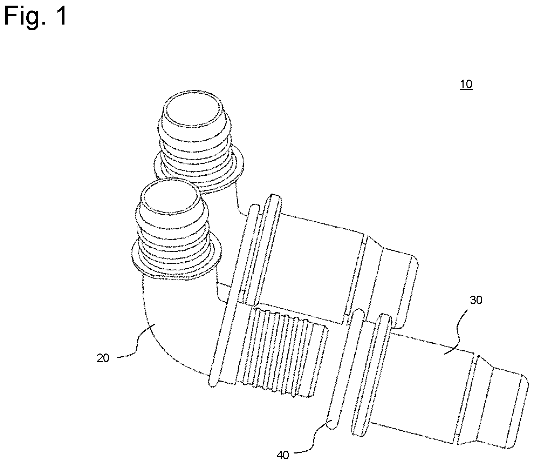

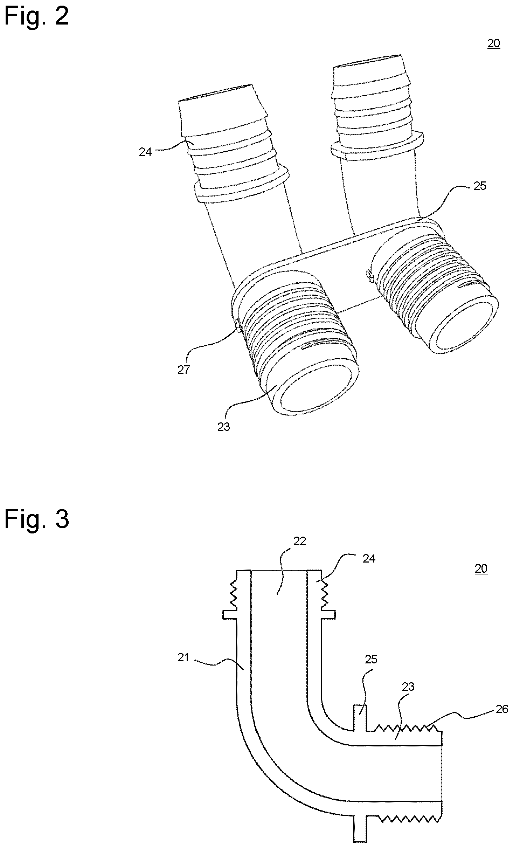

According to an embodiment, a grommet assembly 10 is shown in FIG. 1. The grommet assembly 10 includes a grommet 20, a spigot 30 and a sealing ring 40. The grommet 20 and the spigot 30 will be described in more detail hereinafter in relation to FIG. 2 to FIG. 5.

When installing the grommet assembly 10 onto a panel (not shown), the spigot 30 is engaged with the grommet 10 such that the sealing ring 40 is pressed against the panel making the grommet assembly 10 fluidly tightened against the panel. The sealing ring 40 can be made of any convenient material including plastics as synthetic rubbers. Examples of plastics are polyvinyl chloride (PVC), polyethylene (PE) and polypropylene (PP). Examples of synthetic rubbers are Nitril Butadiene Rubber (NBR), Hydrogenated Nitrile Rubber (HNBR), Ethylene Propylene Diene Monomer (EPDM) rubber, Chloroprene rubber (CR), Fluorine Kautschuk Material (FKM) - for example Viton ^{®} - Fluorocarbon rubber (FPM), and Methyl Vinyl Silicone (MVQ) rubber.

Although, FIG. 1 is described such that the grommet assembly comprises two grommets and two spigots, the skilled person would understand that any other number of grommets and spigots can be used without departing from the scope of the disclosure. For example, the grommet assembly can have one grommet and one spigot. As another example, the grommet assembly can have three grommets and three spigots. The number of grommets and spigots may vary dependent on the use necessities. For example, the grommet assemble can have two grommets and two spigots, one grommet and one spigot for routing or guiding fluid in one direction and the other grommet and spigot for routing or guiding fluid in another direction.

FIG. 2 shows a perspective view of the grommet 20 of FIG. 1, and FIG. 3 shows a cross-sectional view of the grommet 20 of FIG. 1.

The grommet 20 has a grommet wall 21 that defines a passage 22 for routing a fluid through a panel (not shown). The term "fluid" as used herein refers to any liquid, gas or other material capable of continuously move under an applied shear stress or external force. For example, a coolant like water. The grommet 20 is generally a cylindrical tube that has a first end and a second end opposed to the first end, wherein the passage extends between the first end and the second end.

The grommet 20 comprises a first grommet portion 23 at one end (e.g. the first end) of the grommet 20, a second grommet portion 24 at the other end (e.g. the second end) of the grommet 20, and a plate 25 placed in between the first grommet portion 23 and the second grommet portion 24.

The first grommet portion 23 is designed for receiving the spigot 30 and the second grommet portion 24 is designed for connecting to a fluid pipe, line or hose (not shown). As shown in FIG. 2, the second grommet portion 24 includes multiple raised surfaces, such as bumps, protuberances or the like. The raised surfaces are configured to connect the grommet with the fluid pipe and secure such a connection. It should be noted that, although, FIGs. 2 and 3 show that the second grommet portion 24 includes raised surfaces for connecting with the fluid pipe, any other suitable means for connecting the fluid pipe to the grommet 20 are also included in the disclosure.

The first grommet portion 23 includes engagement means 26 for receiving the spigot 30. For example, the engagement means 26 includes a threaded surface. A number of threads (i.e. the thread length) of the threaded surface may depend on at least one of a material of the grommet 20, a material of the spigot 30 and a material of the panel. For example, the grommet, the spigot, and/or the panel can be made of plastic material, a metal material, or a combination thereof. Plastic materials can have a good electrical and thermal insulation, allowing electrical and thermal isolation of any component from the fluid, and vice versa. Furthermore, plastic material is relatively inexpensive and typically easy to manufacture, thus providing cost savings. Examples of suitable plastic materials are polypropylene, polyethylene, and the like. Metal materials can support high pressures, allowing the use of the grommet assembly when a high-pressure fluid is guided through the grommet assembly.

The plate 25 outwardly extends from the grommet wall 21. The plate 25 and the grommet wall 21 can be integrally formed. The plate 25 is configured to be placed against the panel. That is, when installing the grommet assembly 10, the grommet 20 is introduced through the hole of the panel until the plate 25 is placed against the panel and such that the panel is located between the plate 25 and the first grommet portion 23.

Optionally, the plate 25 can include at least one locking means 27. The locking means 27 prevents the panel separating from the plate 25.

The grommet 20 has a bended-shape defined by the first grommet portion 23 being bended at a predetermined angle with respect to the second grommet portion 24. The predetermined angle is 45-135 degrees, preferably the predetermined angle is 60-120 degrees, and most preferably, the predetermined angle is 80-100 degrees.

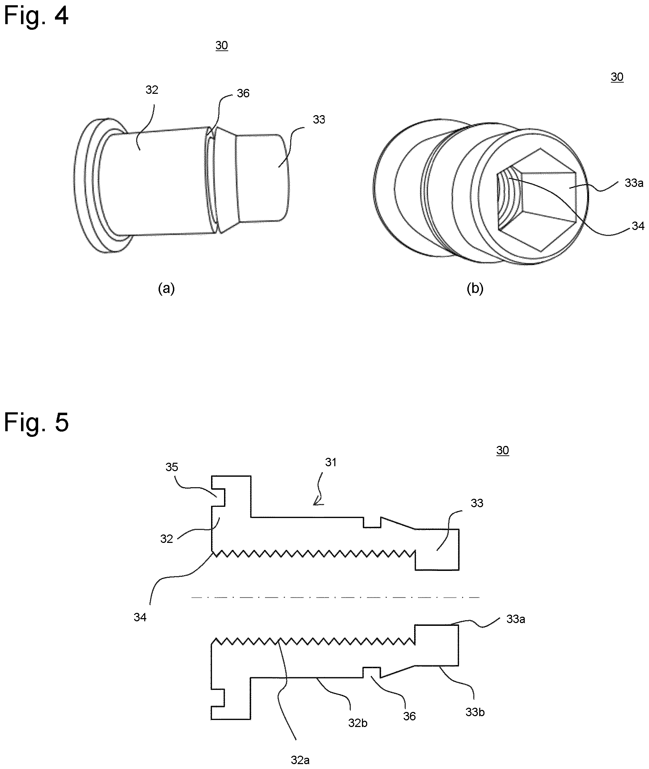

FIGs. 4(a) and (b) show a perspective view of the spigot 30 of FIG. 1, and FIG. 5 shows a cross-sectional view of the spigot 30 of FIG. 1. The spigot 30 has a tubular body 31 with a first tubular portion 32 and a second tubular portion 33.

The first tubular portion 32 comprises an inner surface 32a and an outer surface 32b. The inner surface 32a of the first tubular portion 32 comprises engagement means 34. The spigot 30 is configured to be rotated for engagement with the grommet 20 such that the first tubular portion 32 of the spigot 30 is fluidly tightened against the panel. The engagement means 34 comprises a number of threads. The number of threads depends on at least one of a material of the grommet, a material of the spigot and a material of the panel. Optionally, the number of threads may also depend on a material of the sealing ring and/or a torque needed to be applied to the spigot for fluidly tightening the spigot against the panel. The first tubular portion 32 further comprises a sealing groove 35 extending along a thickness of the first tubular portion 32. The sealing groove 35 is configured for receiving the sealing ring 40 such that the first tubular portion 32 is fluidly tighten against the panel.

The spigot 30 comprises an outer spigot surface, and means for connecting to a first fluid pipe, at least, in a part of the outer spigot surface. For example, at least a part of the outer surface 32b of the first tubular portion 22 includes means for connecting to a fluid pipe. As shown in the figures, the outer surface 32b of the first tubular portion 22 can include a locking groove 36 such that when the fluid pipe is connected to the spigot 30, the fluid pipe is securely locked to the spigot by using an external locking member (not shown) which is placed and retained by the locking groove 36. The external locking member may be designed in the form of a clip, staple, a snap-in button, a wire, and the like.

The second tubular portion 33 comprises an inner surface 33a and an outer surface 33b. The inner surface 33a of the second tubular portion 33 has a tool-shape profile for rotating the spigot on the grommet such that the first tubular portion is fluidly tightened against the panel. Optionally, the tool-shape profile comprises a n-sided shape, n being an integer positive number greater than 2. Preferably n is 6.

In a further embodiment, a vehicle can comprise the grommet assembly 10.

The term "vehicle" as used herein refers to a thing used for transporting people or goods. Automobiles, cars, trucks, or buses etc. are examples of vehicles. The term "vehicle" also includes electric vehicle (EV) powered by an electric motor that draws current from an on-vehicle energy storage device, such as a battery, which is rechargeable from an off-vehicle source, such as residential or public electric service or an on-vehicle fuel powered generator. The EV may be two or more wheeled vehicles manufactured for use primarily on public streets, roads. The EV may be referred to as an electric car, an electric automobile, an electric road vehicle (ERV), a plug-in vehicle (PV), a plug-in vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

When the grommet assembly is provided within a vehicle, the lack of space becomes an issue. As the spigot is used as joint instead of using screws, the grommet assembly minimizes the space required within the vehicle, allowing then that other components of the vehicle use such saved space. Furthermore, the grommet assembly can meet various standards. For example, the Water Tightness Requirement REQ-177530, in which the grommet and spigot must be watertighten to the panel as well as to fluid pipes connected to each of them.

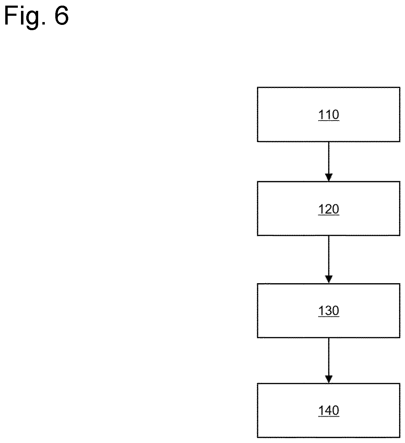

FIG. 6 shows a schematic of a method for installing a grommet assembly according to one example of the disclosure. The method 100 comprises a number of steps.

At step 110, the method 100 comprises inserting the grommet 10 into a through-hole of the panel. It should be noted that the through-hole of the panel should be large enough to insert the grommet but small enough so that the spigot can tighten to the panel.

At step 120, the method 100 comprises rotating the spigot 20 for engagement with the grommet 10 such that first tubular portion 22 is fluidly tightened against the panel. For example, the spigot can be rotated by using a hand, or can be rotated by using a tool, or a combination thereof. By merely rotating the spigot, a fluidly tighten connection is ensured with the panel while the grommet does not need to be held, thereby reducing the number of hands, and/or tools needed for making such a fluidly tighten connection.

Optionally, rotating the spigot for engagement with the grommet comprises engaging the spigot with the grommet by applying a torque to a tool-shape profile of an inner surface of the second tubular portion for rotating the spigot on the grommet such that the first tubular portion is fluidly tightened against the panel by using a tool having a complementary shape to the tool-shape profile.

At step 130, the method 100 comprises connecting a first fluid pipe (not shown) to, at least, a part of an outer spigot surface.

At step 140, the method 100 comprises connecting a second fluid pipe (not shown) to the second grommet portion 12 of the grommet 10.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure is not limited to the particular embodiments disclosed, but that the present disclosure will include all embodiments falling within the scope of the appended claims.

### List of reference numbers:

- 10: grommet assembly
- 20: grommet
- 21: grommet wall
- 22: passage
- 23: first grommet portion
- 24: second grommet portion
- 25: plate
- 26: engagement means of the grommet
- 27: locking means
- 30: spigot
- 31: tubular body
- 32: first tubular portion
- 32a: inner surface of the first tubular portion
- 32b: outer surface of the first tubular portion
- 33: second tubular portion
- 33a: inner surface of the second tubular portion
- 33b: outer surface of the second tubular portion
- 34: engagement means of the spigot
- 35: sealing groove
- 36: locking groove
- 40: sealing ring

## Claims

1. A grommet assembly (10) for a fluid, the grommet assembly comprising:
- a grommet (20) having a grommet wall (21) that defines a passage (22) for routing the fluid through a panel,
- a spigot (30) having a tubular body (31) with a first tubular portion (32) and a second tubular portion (33), an inner surface (32a) of the first tubular portion (32) comprising engagement means (34);
- wherein the spigot (30) is configured to be rotated for engagement with the grommet (20) such that the first tubular portion (32) is fluidly tightened against the panel.

2. The grommet assembly (10) of claim 1,
- wherein an inner surface (33a) of the second tubular portion (33) has a tool-shape profile for rotating the spigot (30) on the grommet (20) such that the first tubular portion (32) is fluidly tightened against the panel.

3. The grommet assembly (10) of claim 2, wherein the tool-shape profile comprises a n-sided shape, n being an integer positive number greater than 2, preferably n is 6.

4. The grommet assembly (10) of any preceding claim, wherein the engagement means (34) comprises a number of threads.

5. The grommet assembly (10) of any preceding claim, wherein the number of threads depends on at least one of a material of the grommet (20), a material of the at spigot (30) and a material of the panel.

6. The grommet assembly (10) of any preceding claim, further comprising
- a sealing ring (40),
- wherein the first tubular portion (32) comprises a sealing groove (35) extending along a thickness of the first tubular portion (32), the sealing groove (35) for receiving the sealing ring (40) such that the first tubular portion (32) is fluidly tight against the panel.

7. The grommet assembly (10) of any preceding claim,
- wherein the spigot (30) comprises an outer spigot surface, and means for connecting to a first fluid pipe, at least, in a part of the outer spigot surface.

8. The grommet assembly (10) of any preceding claim,
- wherein the grommet (10) has a first grommet portion (12) for receiving the spigot and a second grommet portion (13) for connecting to a second fluid pipe, and
- wherein the grommet (10) comprises a plate (15) outwardly extending from the grommet wall (11), wherein the plate (15) is configured to be placed against the panel.

9. The grommet assembly (10) of claim 8,
- wherein the grommet (10) has a bended-shape defined by the first grommet portion being bended at a predetermined angle with respect to the second grommet portion.

10. The grommet assembly (10) of claim 9, wherein the predetermined angle is 45-135 degrees, preferably the predetermined angle is 60-120 degrees, and most preferably, the predetermined angle is 80-100 degrees.

11. The grommet assembly (10) of any preceding claim, wherein the grommet assembly comprises one or more further grommets and one or more further spigots.

12. A vehicle comprising the grommet assembly (10) of any preceding claim.

13. A method (100) for installing a grommet assembly (10) according to any preceding claim into a panel, the method comprising:
- inserting (110) the grommet into a through-hole of the panel, and
- rotating (120) the spigot for engagement with the grommet such that first tubular portion is fluidly tightened against the panel.

14. The method for installing the grommet assembly (10) of claim 13, wherein rotating (120) the spigot for engagement with the grommet comprises:
- engaging the spigot with the grommet by applying a torque to a tool-shape profile of an inner surface of the second tubular portion for rotating the spigot on the grommet such that the first tubular portion is fluidly tightened against the panel by using a tool having a complementary shape to the tool-shape profile.

15. The method for installing the grommet assembly (10) of claim 13 or 14, further comprising:
- connecting (130) a first fluid pipe to, at least, a part of an outer spigot surface, and
- connecting (140) a second fluid pipe to a second grommet portion of the grommet.
